# EUROPEAN PATENT APPLICATION

(11) **EP 2 474 572 A1**
(43) Date of publication of application: **11.07.2012**
(21) Application number: 10813729.0
(22) Date of filing: 01.09.2010
(51) Int. Cl.: C08L 69/00, C01B 31/02, C08K 7/06, C08L 51/04

(54) **ELECTRICALLY CONDUCTIVE THERMOPLASTIC RESIN COMPOSITION**

(30) Priority: 04.09.2009 JP 2009205292
(71) Applicant: Ube Industries, Ltd., Ube-shi Yamaguchi 755-8633 (JP); UMG ABS, Ltd., Chuo-ku Tokyo 104-6591 (JP)
(72) Inventor: NAKAMURA, Ken, Ube-shi Yamaguchi 755-8633 (JP); NISHIO, Masayuki, Ube-shi Yamaguchi 755-8633 (JP); NAITOU, Yoshitaka, Ube-shi Yamaguchi 755-8580 (JP); YOKOHAMA, Hisaya, Ube-shi Yamaguchi 755-8580 (JP)
(74) Representative: Cabinet Plasseraud
(86) International application number: PCT/JP2010/064923
(87) International publication number: WO 2011/027780

(57) **Abstract**

An electrically conductive thermoplastic resin composition contains (i) 100 parts by mass of a thermoplastic resin component, which consists of 1 to 100 % by mass of a polycarbonate resin (A) and 0 to 99 % by mass of a rubber-reinforced resin (B) obtained by polymerizing at least one vinyl monomer selected from the group consisting of an aromatic vinyl, a vinyl cyanide and a (meth)acrylate ester in the presence of a rubbery polymer, and (ii) 0.1 to 20 parts by mass of a fine carbon fiber (C), wherein a graphite-net plane consisting solely of carbon atoms forms a temple-bell-shaped structural unit comprising closed head-top part and body-part with open lower-end, 2 to 30 of the temple-bell-shaped structural units are stacked sharing a common central axis to form an aggregate, and the aggregates are connected in head-to-tail style with a distance to form the fiber. The electrically conductive thermoplastic resin composition can form a molded article having a high electric conductivity and excellent in surface appearance and impact resistance.

## Description

### TECHNICAL FIELD

The present invention relates to a thermoplastic resin composition containing a fine carbon fiber, more specifically, to an electrically conductive thermoplastic resin composition that provides a molded article having a good molding appearance and having an excellent electric conductivity.

### BACKGROUND ART

Conventionally, as a method for imparting an electric conductivity to a thermoplastic resin composition, there have been known (1) a method of surface-treating a molded face of a thermoplastic resin with an electrically conductive paint, plating, a metal deposition and the like (for example, *see* Patent document 1: JP-A-2004-168025), (2) a method for blending into a thermoplastic resin an electrically conductive substance such as an electrically conductive powder such as a metal powder, a carbon powder and a metal flake; a metal fiber of aluminum, stainless steel, brass and the like; and an electrically conductive fiber such as a metal-coated glass fiber and a carbon fiber, and the like.

The above-described method (1) with a surface treatment requires a cumbersome post-step of subjecting a molded article surface to an electrically conductive treatment, and the method also has such a drawback that it tends to form an electrically conductive layer that is non-uniform and is easily detached. In addition, the product is not suitable for recycling because a step is further required to tear away an electrically conductive layer having been formed by the surface treatment when recycling of a waste product is intended.

On the other hand, the above-described method (2) of blending an electrically conductive substance into a thermoplastic resin requires no particular post-processing and there is no problem such as the detachment of an electrically conductive layer, and the method also excels in a recyclability; however, there are problems such as follows.

Since the effect of imparting an electric conductivity is low when an electrically conductive powder such as a carbon powder, a metal powder and a metal flake is added, large blending amount is required for imparting an enough electric conductivity. However, the blending of an electrically conductive powder in a large amount would significantly impair the mechanical properties of a resultant molded article, in particular its impact resistance. The blending of an electrically conductive fiber such as a stainless steel fiber and a carbon fiber would improve the stiffness and thermal properties of a resin composition and its electric conductivity would be better in comparison with the case of adding an electrically conductive powder. However, a fiber is easily broken when being melted and kneaded, and therefore blending in a large amount is again required for compensation, which results in a significant degradation in an impact resistance, an appearance of a molded article and a molding processability of a resultant molded article.

For this reason, there has been demanded a resin composition, with an electrically conductive substance in a small blending amount, which has a high electric conductivity and is also excellent in impact resistance, surface appearance and the like.

In order to address this demand, there has been recently reported a composite material wherein a carbon nanotube as an electrically conductive substance is blended in a thermoplastic resin composition (Patent document 2: JP-A-2009-001740, Patent document 3: JP-A-2006-016553), which has been partially in practical use. These composite materials are known to have characteristics such as a less pollution with particles, excellence in a fluidity, less warping and excellence in a recyclability.

A composite material including a carbon nanotube blended in a thermoplastic resin composition would render an enough electric conductivity on a molded article by press molding, extrusion molding and the like. However, a molded article obtained by a molding method such as injection molding, which exerts shear on a molten resin upon molding, does not have an enough electric conductivity such as those obtained by press molding, extrusion molding and the like. In particular, there is a problem in that the electric conductivity of a molded article is low which has been obtained by a high injection speed with a high shear rate.

A carbon nanotube also is readily agglomerated due to its low dispersibility into a thermoplastic resin, which causes the emergence of agglomerates on the surface of a molded article and worsens the surface appearance. In particular, at a low injection speed, the agglomerates of carbon nanotubes readily emerge on the surface of a molded article, and thus, it is difficult to obtain a molded article having a good surface appearance.

For the foregoing reasons, it has been difficult to obtain a molded article excellent in both an electric conductivity and a surface appearance by using a composite material including a carbon nanotube blended in a thermoplastic resin composition.

### Patent References

Patent document 1: JP-A-2004-168025
Patent document 2: JP-A-2009-001740
Patent document 3: JP-A-2006-016553

### SUMMARY OF INVENTION

### PROBLEM TO BE SOLVED BY THE INVENTION

An object of the present invention is to provide an electrically conductive thermoplastic resin composition capable of forming a molded article having a high electric conductivity and excellent in surface appearance and impact resistance.

### MEANS FOR SOLVING PROBLEM

The present invention relates to the following items.

1. An electrically conductive thermoplastic resin composition, comprising:
100 parts by mass of a thermoplastic resin component, which consists of 1 to 100 % by mass of a polycarbonate resin (A) and 0 to 99 % by mass of a rubber-reinforced resin (B) obtained by polymerizing at least one vinyl monomer selected from the group consisting of an aromatic vinyl, a vinyl cyanide and a (meth)acrylate ester in the presence of a rubbery polymer, and
0.1 to 20 parts by mass of a fine carbon fiber (c), wherein a graphite-net plane consisting solely of carbon atoms forms a temple-bell-shaped structural unit comprising closed head-top part and body-part with open lower-end, 2 to 30 of the temple-bell-shaped structural units are stacked sharing a common central axis to form an aggregate, and the aggregates are connected in head-to-tail style with a distance to form the fiber.

2. The electrically conductive thermoplastic resin composition according to the above item 1, further comprising 1 to 15 parts by mass of a carbon fiber (D).

3. The electrically conductive thermoplastic resin composition according to the above item 1 or 2, wherein an angle θ formed by a generatrix of the body-part and a fiber axis is less than 15°.

4. The electrically conductive thermoplastic resin composition according to any one of the above items 1 to 3, wherein an end of the body-part of the aggregate has an outer diameter D of 5 to 40 nm and an inner diameter d of 3 to 30 nm, and an aspect ratio (L/D) of the aggregate is 2 to 150.

5. The electrically conductive thermoplastic resin composition according to any one of the above items 1 to 4, wherein the fine carbon fiber is produced by vapor phase growth using a catalyst containing an element selected from the group consisting of Fe, Co, Ni, Al, Mg and Si, and an ash content in the fine carbon fiber is 4 % by weight or less.

6. The electrically conductive thermoplastic resin composition according to any one of the above items 1 to 5, wherein the fine carbon fiber is produced by the method comprising feeding a mixed gas containing CO and H₂ onto a catalyst containing a spinel-type oxide of cobalt, in which magnesium is contained by substitution forming solid solution, to initiate a reaction and growing the fine carbon fiber.

7. The electrically conductive thermoplastic resin composition according to the above item 6, wherein when the spinel-type oxide is represented by MgₓCo₃₋ₓO_{y}, "x" which is a solid solution range of magnesium is 0.5 to 1.5.

8. A molded article, wherein the electrically conductive thermoplastic resin composition according to one of the above items 1 to 7 has been molded and processed.

### EFFECT OF THE INVENTION

According to the present invention, there is provided an electrically conductive thermoplastic resin composition having a high moldability and electric conductivity while maintaining the original physical properties of the resin. For this reason, a molded article produced by means of the electrically conductive thermoplastic resin composition of the present invention has a high electric conductivity and an excellent surface appearance and impact resistance. The reasons why the electrically conductive thermoplastic resin composition of the present invention attains this effect are considered as follows.

First, conventional ultrafine carbon fibers collectively called as carbon nanofiber or carbon nanotube can be generally categorized into the following three nanostructured carbon materials based on their shapes, configurations and structures:
(1) Multilayer carbon nanotube (multilayer concentric cylindrical graphite layer)(non-fishbone type);
   Japanese publication of examined application Nos. H03-64606 and H03-77288
   Japanese Laid-Open publication No. 2004-299986
(2) Cup stack type carbon nanotube (fishbone type);
   USP 4,855,091
   M. Endo, Y. A. Kim etc.: Appl. Phys. Lett., vol 80 (2002) 1267 et seq.
   Japanese Laid-Open publication No. 2003-073928
   Japanese Laid-Open publication No. 2004-360099
(3) Platelet type carbon nanofiber (card type)
   H. Murayama, T. maeda,: Nature, vol 345 [No.28] (1990) 791 to 793 Japanese Laid-Open publication No. 2004-300631.

In a (1) multilayer carbon nanotube, conductivity in a longitudinal direction of the carbon nanotube is high because electron flow in a graphite network plane (C-axis) direction contributes to conductivity in a longitudinal direction. On the other hand, for inter-carbon-nanotube conductivity, electron flow is perpendicular to a graphite network plane (C-axis) direction and is generated by direct contact between fibers, but it is believed that within a resin, since inter-fiber contact is not so contributive, electron flow by electrons emitted from the surface layer of a conductive filler plays more important role than electron flow in fibers. Ease of electron emission involves conductivity performance of a filler. It is supposed that in a carbon nanotube, a graphite network plane is cylindrically closed and jumping effect (tunnel effect hypothesis) by n-electron emission little occurs.

In an ultrafine carbon fiber having a (2) fishbone or (3) card type structure, an open end of a graphite network plane is exposed in a side peripheral surface, so that conductivity between adjacent fibers is improved in comparison with a carbon nanotube. However, since the fiber has a piling structure in which C-axis of a graphite network plane is inclined or orthogonal to a fiber axis, conductivity in a longitudinal fiber-axis direction in a single fiber is reduced, resulting in reduced conductivity as the whole composition.

In contrast, fine carbon fibers contained in a composition of the present invention are conductive carbon fibers which do not belong to any of three categories (1) to (3). As described later, it is possible that a temple-bell-shaped body slightly inclined outward is responsible for electron flow in a longitudinal direction of the fiber itself while electron emission from the open end of the temple-bell-shaped body is responsible for inter-fiber electron flow, and this probably contributes to improvement in conductivity performance in the resin.

It is also supposed that the presence of the open end which is an active site leads to high affinity for a resin and improved dispersibility in kneading and at the same time contributes to maintenance and improvement of the physical properties of the resin.

Since a bonding-part of aggregates of temple-bell-shaped structural units (described later) are connected via a weak van der Waals ' force, the aggregates are separated off at the bonding site by shear force during kneading. In general, in catalytic vapor phase growth which is believed at present to be the most promising approach for large-scale production, agglomerates in which long filamentous fibers having a length of 1 µm or more are intricately-entangled (several µm to 1 mm fuzzballs) are formed. However, fine carbon fibers used in the present invention are cut in a proper length by adjusting shear force, promoting shortening (partial cutting) and opening of fiber assemblies, so that it can be dispersed in a resin component without using special dispersing technique or device. For this reason, it is presumed that a molded article having a high electric conductivity and an excellent surface appearance is obtained without impairing the original physical properties of the resin.

### BRIEF DESCRIPTION OF THE DRAWINGS

FIG. 1(a) is a drawing schematically showing a minimal structural unit (temple-bell-shaped structural unit) constituting a fine carbon fiber; and FIG. 1(b) is a drawing schematically showing an aggregate consisting of 2 to 30 stacked temple-bell-shaped structural units.
FIG. 2(a) is a drawing schematically showing connecting aggregates with a certain distance to form a fiber; FIG. 2(b) is a drawing schematically showing curved connection when aggregates are connected with a certain distance.
FIG. 3 is a TEM image of the fine carbon fiber produced in Reference Example A1.

### MODE FOR CARRYING OUT THE INVENTION

As described above, the electrically conductive thermoplastic resin composition of the present invention contains 100 parts by mass of a thermoplastic resin composition consisting of a polycarbonate resin (A) and a rubber-reinforced resin (B), and 0.1 to 20 parts by mass of a fine carbon fiber (C), and optionally further contains 1 to 15 parts by mass of a carbon fiber (D). Hereafter, explanations are given for respective components.

In the following description, unless otherwise indicated, "fine carbon fiber" denotes a carbon fiber having a particular structure described below, and does not mean a carbon fiber having a known structure.

### << Fine carbon fiber (C)>>

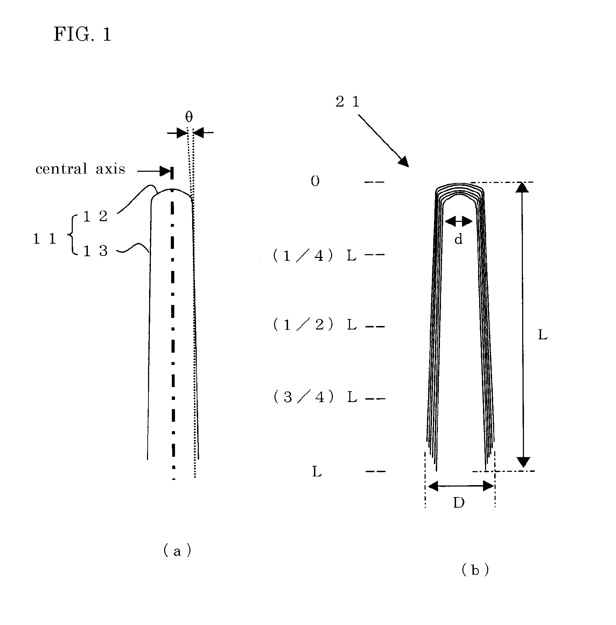

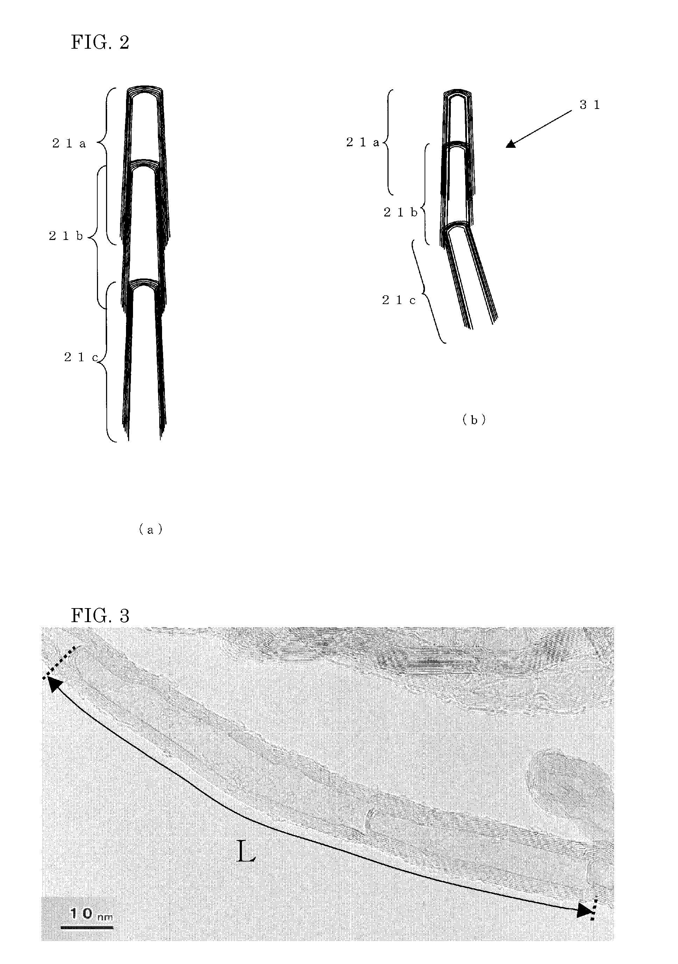

A fine carbon fiber (C) used in the present invention has a temple-bell-shaped structure as shown in FIG. 1(a) as a minimal structural unit. A temple bell is commonly found in Japanese temples, which has a relatively cylindrical-shaped body-part, which is different from a Christmas bell that is very close to cone-shape. As shown in FIG. 1(a), a structural unit 11 has a head-top part 12 and a body-part 13 having an open end like a temple bell and approximately has a shape as a body of rotation formed by rotation about a central axis. The structural unit 11 is constituted by a graphite-net plane consisting solely of carbon atoms, and the circumference of the open-end of the body-part is the open end of the graphite-net plane. Here, although the central axis and the body-part 13 are, for convenience, indicated by a straight line in FIG. 1(a), they are not necessarily straight, but may be curved as shown in FIG. 3 described later.

The body-part 13 is gradually enlarged toward the open-end side, and as a result, the generatrix of the body-part 13 is slightly oblique to the central axis of the temple-bell-shaped structural unit and an angle formed θ by these is less than 15 °, more preferably 1 °< θ < 15 °, further preferably 2 ° < θ < 10 °. With an excessively large θ, a fine fiber constituting from the structural units has a structure like a fish bone carbon fiber, leading to deterioration in conductivity in a fiber axis direction. On the other hand, with a smaller θ, it has a structure like a cylindrical tube and thus the open end of the graphite-net plane constituting the body-part in the structural unit are less exposed in the outer circumference surface of the fiber, leading to deterioration in conductivity between adjacent fibers.

The fine carbon fiber has defects and irregular disturbances, but when their shape is observed as a whole neglecting such irregularity, it can be the that they have a temple-bell-shaped structure where the body-part 13 is gradually enlarged toward the open end side. In terms of the fine carbon fiber, the above description does not mean that θ is within the above range in all parts, but means that when the structural unit 11 is observed as a whole neglecting defects and irregular parts, θ generally is within the above range. Therefore, in determination of θ, it is preferable to eliminate an area near the head-top part 12 where a thickness of the body-part irregularly varies. More specifically, for example, when a length of a temple-bell-shaped structural unit aggregate 21 (see, the description below) is "L" as shown in FIG. 1(b), θ may be measured at three points (1/4)L, (1/2)L and (3/4)L from the head-top part side and an average of the measured values is determined and the average may be regarded as θ for the whole structural unit 11. "L" is ideally measured in a straight line, but actually, the body-part 13 is often curved, and therefore, it can be measured along the curve in the body-part 13 to give a substantially more real value.

When produced as a fine carbon fiber, the head-top part has a shape which is smoothly connected to the body-part and convexly curved to the upper side (in the figure). A length of the head-top part is typically about "D" (see FIG. 1(b)) or less, sometimes about "d" (see FIG. 1(b)) or less, wherein "D" and "d" will be described for a temple-bell-shaped structural unit aggregate.

Furthermore, as described later, active nitrogen is not used as a starting material, so that other atoms such as nitrogen are not contained in the graphite-net plane of the temple-bell-shaped structural unit. Thus, the fiber exhibits excellent crystallinity.

In a fine carbon fiber used in the present invention, as shown in FIG. 1(b), 2 to 30 of such temple-bell-shaped structural units are stacked sharing a central axis, to form a temple-bell-shaped structural unit aggregate 21 (hereinafter, sometimes simply referred to as an "aggregate"). The stack number is preferably 2 to 25, more preferably 2 to 15.

An outer diameter "D" of the body-part of the aggregate 21 is 5 to 40 nm, preferably 5 to 30 nm, further preferably 5 to 20 nm. A diameter of a fine fiber increases as "D" increases, so that in a composite with a polymer, a large amount needs to be added for giving particular functions such as conductivity. On the other hand, as "D" decreases, a diameter of a fine fiber decreases, so that fibers tend to more strongly agglomerate each other, leading to, for example, difficulty in dispersing them in preparation of a composite with a polymer. A body-part outer diameter "D" is determined preferably by measuring it at three points (1/4)L, (1/2)L and (3/4)L from the head-top part of the aggregate and calculating an average. Although FIG. 1(b) shows a body-part outer diameter "D" for convenience sake, an actual "D" is preferably an average of the measured values at the above three points.

An inner diameter "d" of the body-part of the aggregate is 3 to 30 nm, preferably 3 to 20 nm, further preferably 3 to 10 nm. Again, a body-part inner diameter "d" is determined preferably by measuring it at three points (1/4)L, (1/2)L and (3/4)L from the head-top part of the temple-bell-shaped structural unit aggregate and calculating an average. Although FIG. 1(b) shows a body-part inner diameter "d" for convenience sake, an actual "d" is preferably an average of the measured values at the above three points.

An aspect ratio (L/D) calculated from a length "L" of the aggregate 21 and a body-part outer diameter "D" is 2 to 150, preferably 2 to 50, more preferably 2 to 20. With a larger aspect ratio, a fiber formed has a structure of a more cylindrical tube and conductivity in a fiber axis direction in a single fiber is improved, but the open ends of the graphite-net planes constituting the body-part of the structural units are less frequently exposed in the circumferential surface of the fiber, leading to deterioration in conductivity between adjacent fibers. On the other hand, with a smaller aspect ratio, the open ends of the graphite-net planes constituting the body-part of the structural units are more frequently exposed in the circumferential surface of the fiber, so that conductivity between adjacent fibers can be improved, but a fiber circumferential surface is constituted by a number of connected short graphite-net planes in a fiber axis direction, leading to deterioration in conductivity in a fiber axis direction in a single fiber.

The fine carbon fiber is formed by connecting the aggregates in a head-to-tail style as shown in FIG. 2(a). A head-to-tail style means that in a configuration of the fine carbon fiber, a bonding site between adjacent aggregates is formed from a combination of the head-top part (head) of one aggregate and the lower end (tail) of the other aggregate. As a specific style of bonding the part, the head-top part of the outermost temple-bell-shaped structural unit in the second aggregate 21b is inserted into the inner part of the innermost temple-bell-shaped structural unit at a lower opening of a first aggregate 21a; and furthermore, the head-top part of a third aggregate 21c is inserted into the lower opening of a second aggregate 21b, and a number of such combinations are serially connected to form a fiber.

Each bonding part forming one fine fiber of the fine carbon fibers does not have structural regularity; for example, a length of a bonding part between a first aggregate and a second aggregate in a fiber axis direction is not necessarily equal to a length of a bonding part between the second aggregate and a third aggregate. Furthermore, as shown in FIG. 2(a), two aggregates bonded share a common central axis and may be connected in a straight line, but as in the temple-bell-shaped structural unit aggregates 21b and 21c shown in FIG. 2(b), they may be bonded without sharing a central axis, resulting in a curved structure in the bonding part. A length "L" of the temple-bell-shaped structural unit aggregate is approximately constant in each fiber. However, since in vapor phase growth, starting materials and byproduct gaseous components and a catalyst and a solid product component exist in mixture, a temperature distribution may occur in a reaction vessel; for example, a local site at a temporarily higher temperature generates depending on a flowing state of the above heterogeneous reaction mixture of a gas and a solid during an exothermic carbon precipitating reaction, possibly resulting in variation in a length "L" to some extent.

In the fine carbon fiber thus constituted, at least some of the open ends of the graphite-net planes in the lower end of the temple-bell-shaped structural units are exposed in the fiber circumferential surface, depending on a connection distance of the aggregates. Consequently, without conductivity in a fiber axis direction in a single fiber being deteriorated, conductivity between adjacent fibers can be improved due to jumping effect by II-electron emission (tunnel effect) as described above. Such a fine carbon fiber structure can be observed by a TEM image. Furthermore, it can be believed that the effects of a fine carbon fiber are little affected by curving of the aggregate itself or curving of the connection part of the aggregates. Therefore, parameters associated with a structure can be determined by observing an aggregate having a relatively straight part in a TEM image, as the structural parameters (θ, D, d, L) for the fiber.

In XRD by Gakushin-method of a fine carbon fiber, a peak half width W (unit: degree) of 002 plane measured is within the range of 2 to 4. If W is more than 4, graphite exhibits poor crystallinity and poor conductivity. On the other hand, if W is less than 2, graphite exhibits good crystallinity, but at the same time, fiber diameter becomes large, so that a larger amount is required for giving functions such as conductivity to a polymer.

A graphite plane gap d002 as determined by XRD using Gakushin-method of a fine carbon fiber is 0.350 nm or less, preferably 0.341 to 0.348 nm. If d002 is more than 0.350 nm, graphite crystallinity is deteriorated and conductivity is reduced. On the other hand, a fiber of 0.341 nm is produced in a low yield in the production.

The ash content contained in the fine carbon fiber is 4 % by weight or less, and therefore, purification is not necessary for a common application. Generally, it is 0.3 % by weight or more and 3 % by weight or less, more preferably 0.3 % by weight or more and 2 % by weight or less. The ash content is determined from a weight of an oxide as a residue after combustion of 0.1 g or more of a fiber.

When a stress parallel to the fiber axis is applied to the fine carbon fiber having the above structure at the bonding site where the temple-bell-shaped structural unit aggregates are bonded to each other by week force of van der Waals force, sliding at carbon fundamental planes takes place, which leads to the cutting of the fiber in a manner of pulling off. When the fine carbon fiber is produced, it is formed as agglomerates in which long filamentous fibers are intricately-entangled. However, when the fine carbon fiber is blended and kneaded with a resin, it is separated off by shear force, and the entangled agglomerates are shortened (partial cutting) and disentangled, so that the fine carbon fiber is well dispersed in the resin component. For this reason, it is presumed that a molded article having a high electric conductivity and an excellent surface appearance is obtained without impairing the original physical properties of the resin.

### <Process for manufacturing a fine carbon fiber>

A process for manufacturing a fine carbon fiber is as follows. The fine carbon fiber is produced by vapor phase growth using a catalyst. Preferred catalyst comprises an element selected from the group consisting of Fe, Co, Ni, Al, Mg and Si, and the preferred feed gas is a mixed gas containing CO and H₂. Most preferably, using a catalyst which is an oxide of cobalt having a spinel type crystal structure containing magnesium by substitution forming solid solution, vapor phase growth is conducted supplying a mixed gas containing CO and H₂ to the catalyst particles to produce a fine carbon fiber.

A spinel type crystal structure of cobalt where Mg is substituted forming solid solution is represented by MgₓCo₃₋ₓO_{y}. In this formula, x is a number indicating substitution of Co by Mg, and nominally, 0 < x < 3. Furthermore, y is a number selected such that electric charge of the whole formula becomes neutral, and is formally a number of 4 or less. That is, a spinel-type oxide of cobalt Co₃O₄ contains divalent and trivalent Co ions, and when divalent and trivalent cobalt ions are represented by Co^{II} and Co^{III}, respectively, a cobalt oxide having a spinel type crystal structure is represented by Co^{II}Co^{III}₂O₄. Both sites of Co^{II} and Co^{III} are substituted by Mg to form a solid solution. After the solid solution formation by substitution with Mg for Co^{III}, electric charge is kept to be neutral and thus y is less than 4. However, both x and y have a value within a range that a spinel type crystal structure can be maintained.

For the use as a catalyst, a solid solution range of Mg represented by x is preferably 0.5 to 1.5, more preferably 0.7 to 1.5. A solid solution amount as x of less than 0.5 results in poor catalyst activity, leading to production of a fine carbon fiber in a lower yield. If x is more than 1.5, it is difficult to produce a spinel type crystal structure.

A spinel-type oxide crystal structure of the catalyst can be confirmed by XRD, and a crystal lattice constant "a" (cubic system) is within the range of 0.811 to 0.818 nm, more preferably 0.812 to 0.818 nm. If "a" is small, substitutional solid solution formation with Mg is inadequate and catalyst activity is low. The above spinel-type oxide crystal having a lattice constant larger than 0.818 nm is difficult to produce.

We suppose that such a catalyst is suitable because solid solution formation by substitution with magnesium in the spinel structure oxide of cobalt provides a crystal structure as if cobalt is dispersedly placed in magnesium matrix, so that under the reaction conditions, aggregation of cobalt is inhibited.

A particle size of the catalyst can be selected as appropriate and for example, is 0.1 to 100 µm, preferably 0.1 to 10 µm as a median diameter.

Catalyst particles are generally placed on an appropriate support such as a substrate or a catalyst bed by an appropriate application method such as spraying, for use. Spraying catalyst particles on a substrate or catalyst bed can be conducted by directly spraying the catalyst particles or spraying a suspension of the particles in a solvent such as ethanol and then drying it to spray a desired amount.

It is also preferable that catalyst particles are activated before being reacted with a source gas. Activation is generally conducted by heating under a gas atmosphere containing H₂ or CO. Such activation can be conducted by diluting the above gas with an inert gas such as He and N₂ as necessary. A temperature at which activation is conducted is preferably 400 to 600 °C, more preferably 450 to 550 °C.

There are no particular restrictions to a reactor for vapor phase growth, which can be conducted using a reactor such as a fixed-bed reactor and a fluidized-bed reactor.

A mixed gas containing CO and H₂ is used as a source gas to be a carbon source in vapor-phase growth.

An addition concentration of H₂ gas {(H₂/(H₂+CO)} is preferably 0.1 to 30 vol%, more preferably 2 to 20 vol%. When the addition concentration is too low, cylindrical graphite net planes form a carbon-nanotube-like structure parallel to a fiber axis. On the other hand, if it is more than 30 vol%, the angle of the temple-bell-shaped structure oblique to the fiber axis of a carbon side peripheral surface becomes larger and similar to a fish-bone shape, leading to lower conductivity in a fiber direction.

The source gas can contain an inert gas. Examples of such an inert gas include CO₂ N₂, He and Ar. The inert gas is preferably contained in such an amount that it does not significantly reduce a reaction rate; for example, 80 vol% or less, preferably 50 vol% or less. Furthermore, a synthetic gas containing H₂ and CO or a waste gas such as a steel converter exhaust gas can be, as necessary, used after appropriate treatment.

A reaction temperature for conducting vapor-phase growth is preferably 400 to 650 °C, more preferably 500 to 600 °C. If a reaction temperature is too low, a fiber does not grow. On the other hand, if a reaction temperature is too high, an yield is reduced. A reaction time is, but not limited to, for example, 2 hours or more and about 12 hours or less.

In terms of a reaction pressure, vapor-phase growth can be conducted at an ambient pressure from the viewpoint of convenience of a reactor or operation, but as long as carbon growth of Boudouard equilibrium proceeds, the reaction can be conducted under the pressurized or reduced-pressure condition.

It has been demonstrated that according to this manufacturing process for a fine carbon fiber, an yield of a fine carbon fiber per a unit weight of the catalyst is considerably higher than that in a conventional manufacturing process. An yield of a fine carbon fiber according to this manufacturing process for a fine carbon fiber is 40 folds or more, for example 40 to 200 folds per a unit weight of the catalyst. As a result, a fine carbon fiber containing reduced amount of impurities and ash content as described above can be produced.

Although a process of forming the bonding part unique to the fine carbon fiber prepared by this manufacturing process for a fine carbon fiber is not clearly understood, it is speculated that balance between exothermic Boudouard equilibrium and heat removal by source-gas flowing causes variation of a temperature near the fine cobalt particles formed from the catalyst, so that carbon growth intermittently proceeds, resulting in formation of the bonding part. In other words, it is speculated that four processes: [1] formation of a head-top part of a temple-bell-shaped structure, [2] growth of a body-part in the temple-bell-shaped structure, [3] pause of growth due to temperature increase caused by the processes [1] and [2], and [4] cooling by a flowing gas, are repeated on fine catalyst particles, to form the bonding part unique to a fine carbon fiber structure.

### <<Thermoplastic resin component>>

The thermoplastic resin component contains 1 to 100 % by mass of a polycarbonate resin (A) and 0 to 99 % by mass of a rubber-reinforced resin (B).

The polycarbonate resin (A) used in the present invention is produced by, for example, reacting a dihydroxy or polyhydroxy compound such as bisphenols with phosgene or the diester of carbonic acid.

The specific examples of bisphenols include hydroquinone, 4,4-dihydroxyphenyl, bis-(4-hydroxyphenyl)-alkane, bis-(4-hydroxyphenyl)-cycloalkane, bis-(4-hydroxyphenyl)-sulfide, bis-(4-hydroxyphenyl)-ether, bis-(4-hydroxyphenyl)-ketone, bis-(4-hydroxyphenyl)-sulfone, or alkyl substituted compounds, aryl substituted compounds or halogen substituted compounds thereof, and the like, and these are used alone or in combination with two or more compounds.

Particular preference is given to those obtained from a dihydroxydiarylalkane, which may be optionally branched.

The dihydroxydiarylalkanes that may be used are, for example, those having an alkyl group at an ortho position relative to a hydroxy group. The preferred specific examples of the dihydroxydiarylalkane include 4,4-dihydroxy-2,2-diphenylpropane (namely bisphenol A), tetramethyl bisphenol A, bis-(4-hydroxyphenyl)-p-diisopropylbenzene and the like.

A branched polycarbonate is also produced, for example, by replacing a portion of a dihydroxy compound, for example 0.2 to 2 % by mole, with polyhydroxy. The specific examples of the polyhydroxy compound include fluoroglycinol, 4,6-dimethyl-2,4,6-tri-(4-hydroxyphenyl)-heptene, 4,6-dimethyl-2 ,4,6-tri-(4-hydroxyphenyl)-heptane, 1,3,5-tri-(4-hydroxyphenyl)-benzene and the like.

It is preferred that the viscosity average molecular weight (Mv) of the polycarbonate resin (A) is from 15,000 to 35,000. The impact resistance of a reinforced thermoplastic resin composition becomes higher when the viscosity average molecular weight of the polycarbonate resin (A) is not less than 15,000, and the moldability of a reinforced thermoplastic resin composition becomes higher when the molecular weight is not more than 35,000. More preferably, the viscosity average molecular weight (Mv) of the polycarbonate resin (A) is from 17,000 to 25,000 due to particular excellence in the balance of a mechanical strength, a falling ball impact strength and a fluidity.

The rubber-reinforced resin (B) used in the present invention is obtained by polymerizing at least one vinyl monomer selected from the group consisting of an aromatic vinyl, a vinyl cyanide and a (meth)acrylate ester in the presence of a rubbery polymer.

The rubbery polymer includes, for example, butadiene rubber, styrene-butadiene rubber, acrylonitrile-butadiene rubber, isoprene rubber, chloroprene rubber, butyl rubber, ethylene-propylene rubber, ethylene-propylene-non-conjugated diene rubber, acrylic rubber, epichlorohydrin rubber, diene-acrylic composite rubber, silicone (polysiloxane)-acrylic composite rubber and the like. Among these, preference is given to butadiene rubber, styrene-butadiene rubber, acrylonitrile-butadiene rubber, acrylic rubber, diene-acrylic composite rubber and silicone-acrylic composite rubber because the molded article obtained from the electrically conductive thermoplastic resin composition of the present invention shows excellent surface appearance and impact resistance.

Here, the diene component of the diene-acrylic composite rubber described above is those containing 50 % by mass or more of butadiene units, specific examples of which include butadiene rubber, styrene-butadiene rubber, acrylonitrile-butadiene rubber and the like.

The acrylic rubber component in the diene-acrylic composite rubber is those polymerized from an alkyl (meth)acrylate and a polyfunctional monomer. Here, the alkyl (meth)acrylate includes, for example, an alkyl acrylate such as methyl acrylate, ethyl acrylate, n-propyl acrylate, n-butyl acrylate, 2-ethylhexyl acrylate; an alkyl methacrylate such as hexyl methacrylate, 2-ethylhexyl methacrylate, n-lauryl methacrylate. These may be used alone or in combination of two or more compounds. The polyfunctional monomer includes, for example, allyl methacrylate, ethylene glycol dimethacrylate, propylene glycol dimethacrylate, 1,3-butylene glycol dimethacrylate, 1,4-butylene glycol dimethacrylate, triallyl cyanurate, triallyl isocyanurate and the like. These may be used alone or in combination of two or more compounds.

The composite structure of the diene-acrylic composite rubber includes a core-shell structure wherein the periphery of the core layer of a diene-based rubber is covered with an alkyl (meth)acrylate-based rubber, a core-shell structure wherein the periphery of the core layer of an alkyl (meth)acrylate-based rubber is covered with a diene-based rubber, a structure wherein a diene-based rubber and an alkyl (meth)acrylate-based rubber are intertwined with one another, a copolymer-structure wherein a diene-based monomer unit and an alkyl (meth)acrylate-based monomer unit align in a random sequence, and the like.

A silicone component of the silicone-acrylic composite rubber described above is those comprising primarily a polyorganosiloxane, among which preference is given to the polyorganosiloxane containing a vinyl polymerizable functional group. An acrylic rubber component used in the silicone-acrylic composite rubber is similar to those already explained for the acrylic rubber component of the diene-acrylic composite rubber.

The composite structure of the silicone-acrylic composite rubber includes a core-shell structure wherein the periphery of the core layer of a polyorganosiloxane rubber is covered with an alkyl (meth)acrylate-based rubber, a core-shell structure wherein the periphery of the core layer of an alkyl (meth)acrylate-based rubber is covered with a polyorganosiloxane rubber, a structure wherein a polyorganosiloxane rubber and an alkyl (meth)acrylate-based rubber are intertwined with one another, a structure wherein the segment of a polyorganosiloxane and the segment of a polyalkyl (meth)acrylate are linearly and sterically bonded with one another to give a network-like rubber structure, and the like.

The rubbery polymer is prepared by, for example, an emulsion polymerization with the action of a radical polymerization initiator on a monomer to form the rubbery polymer. In accordance with a preparation method of the emulsion polymerization, it is easy to control a particle diameter of the rubbery polymer.

It is preferred that an average particle diameter of the rubbery polymer is from 0.1 to 0.6 µm because the impact resistance of a reinforced thermoplastic resin composition can be further heightened.

The proffered content of the rubbery polymer in the rubber-reinforced resin is from 10 to 70 % by weight.

The vinyl monomer to be polymerized in the presence of the rubbery polymer is selected from the group of an aromatic vinyl, a vinyl cyanide and a (meth)acrylate ester. The aromatic vinyls include, for example, styrene, α-methylstyrene, vinyltoluene and the like, and it is preferably styrene. The vinyl cyanides include, for example, acrylonitrile, methacrylonitrile and the like, and it is preferably acrylonitrile. The (meth)acrylate esters include, for example, a methacrylate ester such as methyl methacrylate, ethyl methacrylate, 2-ethylhexyl methacrylate, an acrylate ester such as methyl acrylate, ethyl acrylate, butyl acrylate, and the like.

There is no particular limitation on a method for producing the rubber-reinforced resin, and may be polymerized by any known method, but preference is given to a emulsion polymerization method. A wide variety of chain transfer agents may also be added upon polymerizing in order to adjust a molecular weight and a graft ratio of the rubber-reinforced resin.

### <<Carbon fiber (D)>>

In the present invention, a carbon fiber may be blended as an optional component as necessary. The carbon fiber includes ordinary carbon fibers such as a PAN-based carbon fiber and a pitch-based carbon fiber.

It is preferred that the carbon fiber to be used in the present invention is those with a fiber diameter of 4 to 20 µm and a fiber length of 3 to 20mm. This is because the carbon fiber becomes expensive due to a difficulty in its production when the fiber diameter of the carbon fiber becomes small, and sufficient blending effect such as an electric conductivity, electromagnetic wave shielding and the like cannot be obtained to the extent that commensurate a blending amount when the diameter becomes too large. An enough effect cannot be obtained with a small amount of blending when the fiber length of the carbon fiber is short. On the other hand, too long fiber length lowers the fluidity of melted resin, resulting in difficulty in kneading and extruding.

### <<Electrically conductive thermoplastic resin composition and molded article>>

The electrically conductive thermoplastic resin composition of the present invention is produced by mixing above-mentioned polycarbonate resin (A), rubber-reinforced resin (B), fine carbon fiber (C), and optionally carbon fiber (D).

The blending ratios of the polycarbonate resin (A) and the rubber-reinforced resin (B) are: from 1 to 100 % by mass for the polycarbonate resin (A), and from 0 to 99 % by mass for the rubber-reinforced resin (B) in 100 % by mass of a thermoplastic resin component (the total of the polycarbonate resin (A)and the rubber-reinforced resin (B)); and preferably from 40 to 90 % by mass for the polycarbonate resin (A) and from 10 to 60 % by mass for the rubber-reinforced resin (B).

The blending ratio of the fine carbon fiber is from 0.1 to 20 parts by mass relative to 100 parts by mass of the thermoplastic resin component, preferably from 0.1 to 10 parts by mass and yet preferably from 3 to 10 parts by mass.

Although the carbon fiber (D) may arbitrarily be blended in a requisite amount, an enough electric conductivity can be obtained even without blending in a large amount due to the existence of the fine carbon fiber in the present invention and the smaller amount allows for the better appearance. In this regard, the blending ratio of the carbon fiber is generally not more than 15 parts by mass relative to 100 parts by weight of the thermoplastic resin component and more preferably not more than 12 parts by mass. In case it is blended, the ratio is also generally not less than 0.1 parts by mass.

A mixing method for obtaining the composition of the present invention is not particularly limited, and may be employed a conventionally known method. Employable methods include those, for example, in which respective components have been uniformly mixed by the Henschel mixer, a super mixer, a tumbler mixer, a ribbon blender and the like, and then the components are melted and kneaded by a single screw extruder, a twin screw extruder, the Banbury mixer or the like.

Into the electrically conductive thermoplastic resin composition of the present invention, known additives may be added in a range not interfering with the spirit of the present invention. These additives include a wide variety of additives such as a flame retardant, a flame retardant auxiliary, an antioxidant, a ultraviolet absorber, a lubricant, a plasticizer, a mold-releasing agent, an antistatic agent, a colorant (a pigment, a dye and the like), a filler, an antimicrobial agent, an antifungal agent, a silicone oil and a coupling agent.

The resin composition of the present invention obtained in this way can be molded into a wide variety of molded articles by a known molding method. A molding-process method includes, for example, an injection molding method, an injection compression molding method, an extrusion method, a blow molding method, a vacuum molding method, an air-pressure molding method, a calender molding method, an inflation molding method and the like. Among these, preference is given to an injection molding method and an injection compression molding method because a molded article with a high dimensional accuracy can be obtained with an excellent mass-productivity.

A molded article of the composition of the present invention has a high electric conductivity and is excellent in surface appearance and impact resistance, and in addition, the article is also suitable for recycling. For this reason, the article can be suitably used in various applications, including housings of an electric and electronic equipment and an electronic equipment part having potential problems of electromagnetic wave interference (EMI). For example, it may be used for cases of communication equipment such as a personal computer (including a notebook type), a projector (including a liquid crystal projector), a television, a printer, a facsimile machine, a copier, an audio equipment, a game console, a camera (including a video camera, a digital camera and the like), a video equipment such as a video, a musical instrument, a mobile equipment (an electronic pocketbook, a personal digital assistant (PDA) and the like), a lighting equipment, a telephone (including a mobile phone), and in addition a tool for playing such as a fishing tackle and pinball means, a product for vehicles, a product for furniture, a sanitary product, a product for building materials and the like. Among these applications, suitableness is given to a chassis of an electronic part such as a laptop personal computer or a mobile equipment because the effects of present invention are especially exerted.

### EXAMPLES

Hereafter, the present invention will be explained more specifically by showing production examples, working examples and comparative examples. However, various variations may be possible for the present invention unless exceeding the gist of the invention, and therefore the present invention shall not be limited to the following examples.

### Production of the rubber-reinforced resin (B)

### <Production example 1> Production of the rubber-reinforced resin (B-1)

96 parts by mass of octamethyltetracyclosiloxane, 2 parts by mass of γ-methacryloxypropyldimethoxymethylsilane and 2 parts by mass of ethyl orthosilicate were mixed to obtain 100 parts by mass of a siloxane-based mixture. To this mixture, added was a solution prepared by dissolving 0.67 parts by mass of sodium dodecylbenzenesulfonate in 300 parts by mass of distilled water, which was stirred by a homomixer at 10000 revolutions/2 minutes, which was thereafter passed once through a homogenizer under a pressure of 30 MPa to obtain a stable premixed organosiloxane latex.

Also, 2 parts by mass of dodecylbenzenesulfonic acid and 98 parts by mass of distilled water were charged into a reaction vessel equipped with a reagent injection container, a cooling tube, a jacket heater and a stirring apparatus to prepare a 2 % dodecylbenzenesulfonic acid aqueous solution. While heating this aqueous solution at 85 °C, the premixed organosiloxane latex was added dropwise over 4 hours and after the completion of the dropwise addition, the temperature was maintained for one hour and cooled down. After this reaction liquid was allowed to stand at room temperature for 48 hours, the liquid was neutralized with a sodium hydroxide aqueous solution to obtain the polyorganosiloxane latex (L-1). A portion of the polyorganosiloxane latex (L-1) was dried at 170 °C for 30 minutes to determine the solid content concentration, which was found to be 17.3%.

Then, 43 parts by mass of the polyorganosiloxane latex (L-1) and 0.3 parts by mass of sodium polyoxyethylene alkylphenyl ether sulfate were charged into a reaction vessel equipped with a reagent injection container, a cooling tube, a jacket heater and a stirring apparatus, and 203 parts by mass of distilled water was added and mixed. Thereafter, a mixture was added which consists of 19.2 parts by mass of n-butyl acrylate, 0.07 parts by mass of allyl methacrylate, 0.04 parts by mass of 1,3-butylene glycol dimethacrylate and 0.04 parts by mass of tertiary butyl hydroperoxide. The atmosphere was replaced with nitrogen by passing a nitrogen gas flow through this reaction vessel and the temperature was raised to 60 °C. When the temperature inside the reaction vessel reached 60 °C, added was an aqueous solution containing 0.0001 parts by mass of ferrous sulfate, 0.0003 parts by mass of disodium ethylenediamine tetraacetate and 0.24 parts by mass of Rongalite dissolved in 10 parts by mass of distilled water, to initiate radical polymerization. Due to the polymerization of the acrylate components, temperature of the liquid rose to 78 °C. This state was maintained for one hour, thereby to complete the polymerization of the acrylate components to obtain a composite rubber latex of polyorganosiloxane and a butyl acrylate rubber.

After the liquid temperature inside the reaction vessel fell to 60 °C, an aqueous solution was added, in which 0.4 parts by mass of Rongalite was dissolved in 10 parts by mass of distilled water. Then, a mixed liquid of 11.1 parts by mass of acrylonitrile, 33.2 parts by mass of styrene and 0.2 parts by mass of tertiary butyl hydroperoxide was added dropwise over about one hour and the polymerization was conducted. After the completion of the dropwise addition and allowing it to stand for one hour, an aqueous solution was added, in which 0.0002 parts by mass of ferrous sulfate, 0.0006 parts by mass of disodium ethylenediamine tetraacetate and 0.25 parts by mass of Rongalite were dissolved in 10 parts by mass of distilled water. Then, a mixed liquid of 7.4 parts by mass of acrylonitrile, 22.2 parts by mass of styrene and 0.1 parts by mass of tertiary butyl hydroperoxide was added dropwise over about 40 minutes to conduct the polymerization. After the completion of the dropwise addition and allowing it to stand for one hour, the mixture was cooled down to obtain a latex of a graft copolymer wherein an acrylonitrile-styrene copolymer was grafted to a composite rubber consisting of polyorganosiloxane and a butyl acrylate rubber.

Then, 150 parts by mass of an aqueous solution was heated to 60 °C and stirred, in which calcium acetate was dissolved in a proportion of 5%. Into the calcium acetate aqueous solution, 100 parts by mass of the latex of the graft copolymer was gradually added dropwise, thereby to coagulate the latex. The resultant coagulate was separated, washed and thereafter dried to obtain a dry powder of the rubber-reinforced resin (B-1).

### <Production example 2> Production of the rubber-reinforced resin (B-2)

To 100 parts by mass (as a solid content) of a polybutadiene latex with a solid content concentration of 35 % and an average particle diameter of 0.08 µm, 2 parts (as a solid content) of a copolymer latex with an average particle diameter of 0.08 µm, which consisted of 85% of an n-butyl acrylate unit and 15% of a methacrylic acid unit, was added while stirring. The stirring was then continued for 30 minutes to obtain an enlarged butadiene-based rubbery polymer latex with an average particle diameter of 0.28 µm.

The resultant enlarged butadiene-based rubbery polymer latex was charged in a reaction vessel, to which further added were 100 parts by mass of distilled water, 4 parts by mass of the Wood Rosin emulsifier, 0.4 parts by mass of the Demor N (a trade name, manufactured by the Kao Corporation, a formalin naphthalenesulfonate condensate), 0.04 parts by mass of sodium hydroxide and 0.7 parts by mass of dextrose. A temperature was then raised while stirring and when the inside temperature reached 60 °C, 0.1 parts by mass of ferrous sulfate, 0.4 parts by mass of sodium pyrophosphate and 0.06 parts by mass of sodium dithionite were added, thereafter, a mixture comprising the following components was continuously added dropwise over 90 minutes, which was maintained for one hour and cooled down.

Acrylonitrile 30 parts by mass
Styrene 70 parts by mass
Cumen hydroperoxide 0.8 parts by mass
t-Dodecylmercaptan 0.8 parts by mass
After the graft copolymer latex obtained in this manner was coagulated with dilute sulfuric acid, it was washed, filtered and dried to obtain a dry powder of the rubber-reinforced resin (B-2).

### Synthesis of fine carbon fibers (C)

### <Reference example 1> Production example_of fine carbon fibers

In 500 mL of ion-exchanged water were dissolved 115 g of cobalt nitrate [Co(NO₃)₂ ·6H₂O: molecular weight 291.03] (0.40 mol) and 102 g of magnesium nitrate [Mg(NO₃)₂ ·6H₂O: molecular weight 256.41] (0.40 mol), to prepare raw-material solution (1). Furthermore, 220 g of powdery ammonium bicarbonate [(NH₄)HCO₃: molecular weight 79.06] (2.78 mol) was dissolved in 1100 mL of ion-exchanged water, to prepare raw-material solution (2). Next, raw-material solutions (1) and (2) were mixed at a reaction temperature of 40 °C, after which the mixture was stirred for 4 hours. The precipitate formed was filtered, washed and then dried.

The product was calcined and pulverized with a mortar to provide 43 g of a catalyst. A crystal lattice constant "a" (cubic system) of the spinel structure in this catalyst was 0.8162 nm, and a metallic element ratio in the spinel structure of the substitutional solid solution was Mg : Co = 1.4 : 1.6.

A quartz reaction tube (inner diameter: 75 mmϕ, height: 650 mm) was perpendicularly fixed and in its center was placed a support of silica wool on which was then dispersed 0.9 g of the catalyst. Under He atmosphere, the tube was heated to a furnace temperature of 550 °C, and then a mixed gas consisting of CO and H₂ (volume ratio: CO/H₂ = 95.1/4.9) as a source gas was fed from the bottom of the reaction tube at a flow rate of 1.28 L/min for 7 hours, to synthesize a fine carbon fiber.

An yield was 53.1 g, and an ash content was determined as 1.5 % by weight. A peak half width "W" (degree) observed in XRD analysis of the product was 3.156 and d002 was 0.3437 nm. Furthermore, from a TEM image, parameters related to the dimensions of temple-bell-shaped structural units constituting the fine carbon fiber obtained and the aggregate of these were D = 12 nm, d = 7 nm, L = 114 nm, L/D = 9.5, θ = 0 to 7 ° (average: about 3 °). A stack number of the temple-bell-shaped structural units constituting the aggregate was about 10. Here, D, d and θ were determined for three points (1/4)L, (1/2)L and (3/4)L from the head-top of the aggregate. FIG. 3 shows a TEM image of the fine carbon fiber prepared in Reference example 1.

### <Production example 3> Production of a resin masterbatch comprising the fine carbon fiber

10 % by mass of the fine carbon fiber produced by a method similar to the foregoing reference example 1 was blended into 90 % by mass of the polycarbonate resin ("S-3000F" made by the Mitsubishi Engineering Plastics Co., Ltd.), which was preliminarily mixed by the Henschel mixer, and thereafter the formulation was melted and kneaded at 250 °C by a twin screw extrusion kneader and the molten mixture was pelletized to produce the polycarbonate masterbatch containing the fine carbon fibers.

As other blending components, follows were used.

Polycarbonate (A): "S-3000F" made by the Mitsubishi Engineering Plastics Co., Ltd. (viscosity-average molecular weight (Mv): 22000). Carbon fiber (D): "TR06Q" made by the Mitsubishi Rayon Co., Ltd. Carbon nanotube (CNT): the masterbatch (MB6015-00, base polymer: polycarbonate) made by the Hyperion Catalysis, containing 15 % in concentration of carbon nanotubes which has a diameter of 20nm and an aspect ratio not less than 5.

After respective materials were mixed in the proportion shown in **Tables 1** and **2,** they were melted and kneaded by a twin screw extruder ("KTX-30" made by the Kobe Steel, Ltd.) at 260 °C and pelletized. This pellet was molded by a four-ounce injection molding machine (made by the Nippon Steel Co., Ltd.) at 300 °C to make necessary test pieces, and the following evaluations were carried out.

### <Evaluation method>

### [Surface specific resistance]

A rectangular plate with dimensions of 100 mm x 100 mm x 2 mm was made by injection molding at a varied injection speed (5 mm/sec., 20 mm/sec. and 40 mm/sec.), and its surface specific resistance was measured by using a low resistivity meter ("MCP-T600" made by the Mitsubishi Chemical Co., Ltd.). (A resistance value not less than the equipment measurement limit was denoted as ND.)

### [Molding appearance]

A rectangular plate with dimensions of 100 mm x 100 mm x 2 mm was made by injection molding at a varied injection speed (5 mm/sec., 20 mm/sec. and 40 mm/sec.), and its molding appearance was identified.
⊚: A surface is smooth and lustrous.
○: A surface is smooth, but not lustrous.
△: Convex or fibrous emboss is seen on a molded surface.
×: A number of convex or fibrous emboss is seen on a molded surface.

### [Impact resistance]

A rectangular plate with dimensions of 100 mm x 100 mm x 1 mm was made by injection molding to make a test piece. The made test piece was placed on an aluminum hollow frame with dimensions of 100 mm x 100 mm x 20 mm (wall thickness: 2 mm), on which an iron ball of 500 g was dropped to measure the height such that a crack was generated on the test piece.

**Table 1**

| | Examples | | | | | | | |
|---|---|---|---|---|---|---|---|---|
| | 1 | 2 | 3 | 4 | 5 | 6 | 7 | 8 |
| Polycarbonate (A) | | 30 | 50 | 30 | 27 | 45 | 47.5 | 47.5 |
| Rubber-reinforced resin (B-1) | 20 | 20 | 20 | | 18 | 18 | 19 | |
| Rubber-reinforced resin (B-2) | | | | 20 | | | | 19 |
| Polycarbonate masterbatch containing the fine carbon fiber*¹⁾ | 80 | 50 | 30 | 50 | 45 | 27 | 28.5 | 28.5 |
| Carbon fiber (D) | | | | | 10 | 10 | 5 | 5 |
| Carbon nanotube | | | | | | | | |
| Surface specific resistance (5mm/s) | 2,20E+03 | 2.20E+03 | 1.00E+04 | 2.30E+03 | 5.00E+02 | 6.00E+03 | 4.20E+04 | 3.80E+04 |
| Surface specific resistance (20mm/s) | 1.00E+04 | 1.00E+04 | 1.00E+08 | 1.00E+04 | 1.00E+03 | 1.00E+04 | 1.00E+06 | 1.10E+06 |
| Surface specific resistance (40mm/s) | 1,20E+04 | 5.00E+04 | ND | 1.30E+05 | 4.40E+03 | 9.80E+04 | 2.00E+07 | 2.20E+07 |
| Molding appearance (5mm/s) | ⊚ | ⊚ | ⊚ | ⊚ | × | × | △ | △ |
| Molding appearance (20mm/s) | ⊚ | ⊚ | ⊚ | ⊚ | △ | △ | ○ | ○ |
| Molding appearance (40mm/s) | ⊚ | ⊚ | ⊚ | ⊚ | ○ | ○ | ○ | ○ |
| Impact resistance (cm) | 200 | >240 | >240 | >240 | 60 | 80 | 90 | 110 |

| | | | | | | | | |
|---|---|---|---|---|---|---|---|---|
| *1) Fine carbon fiber: 10 % by mass, Polycarbonate: 90 % by mass | | | | | | | | |

**Table 2**

| | Comparative examples | | | | |
|---|---|---|---|---|---|
| | 1 | 2 | 3 | 4 | 5 |
| Polycarbonate (A) | 60 | 64 | 68 | 72 | 76 |
| Rubber-reinforced resin (B-1) | 20 | 16 | 17 | 18 | 19 |
| Rubber-reinforced resin (B-2) | | | | | |
| Polycarbonate masterbatch containing the fine carbon fiber | | | | | |
| Carbon fiber (D) | | 20 | 15 | 10 | 5 |
| Carbon nanotube | 20 | | | | |
| Surface specific resistance (5mm/s) | 1.00E+04 | 3.00E+01 | 1.30E+03 | 1.80E+08 | ND |
| Surface specific resistance (20mm/s) | 1.00E+10 | 3.30E+01 | 1.50E+03 | 1.80E+08 | ND |
| Surface specific resistance (40mm/s) | ND | 3.00E+01 | 9.80E+02 | 1.80E+08 | ND |
| Molding appearance (5mm/s) | × | × | × | × | △ |
| Molding appearance (20mm/s) | △ | × | × | △ | ○ |
| Molding appearance (40mm/s) | △ | × | × | △ | ○ |
| Impact resistance (cm) | >240 | <15 | 15 | 100 | 120 |

Tables 1 and 2 elucidate the following. In the examples 1 to 8 within the scope of the present invention, depending on molding conditions, molded articles can be readily obtained, which have a high electric conductivity, and are also excellent in surface appearance and impact resistance.

In the comparative example 1 outside the scope of the present invention, despite it has a high impact resistance, the degradation of electric conductivity is large at a high injection speed, and the generation of projections is also seen on the molded article surface and therefore it is difficult to obtain a molded article excellent in surface appearance.

In the comparative examples 2 to 4 using the carbon fiber, a large amount of blending is required to obtain a high electric conductivity, leading emergence of the carbon fiber visible on a molded article surface. Therefore, it is difficult to obtain a molded article excellent in surface appearance.

In the comparative example 5, sufficient electric conductivity cannot be obtained.

As shown above in accordance with the electrically conductive thermoplastic resin composition of the present invention, there can be obtained a molded article having a high electric conductivity and excellent in impact resistance and surface appearance.

### INDUSTRIAL USABILITY

A molded article of the composition of the present invention has a high electric conductivity and is excellent in a surface appearance and an impact resistance, and in addition, the article is also suitable for recycling. For this reason, the article can be suitably used in various applications, including housings of an electric and electronic equipment and an electronic equipment part and the like.

### Description of symbols

11: structural unit
12: head-top part
13: body-part
21, 21a, 21b, 21c: aggregate

## Claims

1. An electrically conductive thermoplastic resin composition, comprising:
100 parts by mass of a thermoplastic resin component, which consists of 1 to 100 % by mass of a polycarbonate resin (A) and 0 to 99 % by mass of a rubber-reinforced resin (B) obtained by polymerizing at least one vinyl monomer selected from the group consisting of an aromatic vinyl, a vinyl cyanide and a (meth)acrylate ester in the presence of a rubbery polymer, and
0.1 to 20 parts by mass of a fine carbon fiber (C), wherein a graphite-net plane consisting solely of carbon atoms forms a temple-bell-shaped structural unit comprising closed head-top part and body-part with open lower-end, 2 to 30 of the temple-bell-shaped structural units are stacked sharing a common central axis to form an aggregate, and the aggregates are connected in head-to-tail style with a distance to form the fiber.

2. The electrically conductive thermoplastic resin composition according to Claim 1, further comprising 1 to 15 parts by mass of a carbon fiber (D).

3. The electrically conductive thermoplastic resin composition according to Claim 1 or 2, wherein an angle θ formed by a generatrix of the body-part and a fiber axis is less than 15°.

4. The electrically conductive thermoplastic resin composition according to any one of Claims 1 to 3, wherein an end of the body-part of the aggregate has an outer diameter D of 5 to 40 nm and an inner diameter d of 3 to 30 nm, and an aspect ratio (L/D) of the aggregate is 2 to 150.

5. The electrically conductive thermoplastic resin composition according to any one of Claims 1 to 4, wherein the fine carbon fiber is produced by vapor phase growth using a catalyst containing an element selected from the group consisting of Fe, Co, Ni, Al, Mg and Si, and an ash content in the fine carbon fiber is 4 % by weight or less.

6. The electrically conductive thermoplastic resin composition according to any one of Claims 1 to 5, wherein the fine carbon fiber is produced by the method comprising feeding a mixed gas containing CO and H₂ onto a catalyst containing a spinel-type oxide of cobalt, in which magnesium is contained by substitution forming solid solution, to initiate a reaction and growing the fine carbon fiber.

7. The electrically conductive thermoplastic resin composition according to Claim 6, wherein when the spinel-type oxide is represented by MgₓCo₃₋ₓO_{y}, "x" which is a solid solution range of magnesium is 0.5 to 1.5.

8. A molded article, wherein the electrically conductive thermoplastic resin composition according to one of Claims 1 to 7 has been molded and processed.
